Europäisches Patentamt

European Patent Office

Office européen des brevets

(19)

(11) Veröffentlichungsnummer : **0 013 287 B1**

# EUROPÄISCHE PATENTSCHRIFT

(12)

(45) Veröffentlichungstag der Patentschrift :
**05.10.83**

(21) Anmeldenummer : **79103308.7**

(22) Anmeldetag : **06.09.79**

(51) Int. Cl.³ : **G 05 D 23/19, F 24 F 11/00, F 24 D 19/10**

(54) **Einrichtung zur energiemässigen Optimierung der Temperatur-Änderung in Gebäuden während deren Belegungspausen.**

(30) Priorität : **21.12.78 CH 13007/78**

(43) Veröffentlichungstag der Anmeldung :
**23.07.80 Patentblatt 80/15**

(45) Bekanntmachung des Hinweises auf die Patenterteilung : **05.10.83 Patentblatt 83/40**

(84) Benannte Vertragsstaaten :
**FR GB IT SE**

(56) Entgegenhaltungen :
**DE A 2 505 683
DE A 2 617 154
DE A 2 805 773
GB A 1 193 711
US A 4 024 510**

**REGELUNGSTECHNISCHE PRAXIS, Nr. 11, 1978
München S. BERGMANN et al. « Ein universeller digitaler Regler mit Mikrorechner » Seiten 322 bis 325**

**CONTROL ENGINEERING, Band 26, Nr. 1, 1979
New York H. MORRIS « A look at the new programmable temperature controllers » Seiten 40 bis 42**

**ELECTRONIQUE & APPLICATIONS INDUSTRIELLES Nr. 248, 01.03.1978, M. QUAKNINE « Structure et fonctionnement d'un système de régulation de pH et de température » Seiten 37 bis 41**

(73) Patentinhaber : **LGZ LANDIS & GYR ZUG AG
Konzern-Patentabteilung
CH-6301 Zug (CH)**

(72) Erfinder : **Eckstein, Volker
Riedmatt 36
CH-6300 Zug (CH)**
Erfinder : **Steinle, Benedikt
Schönbühl 10
CH-6300 Zug (CH)**

(74) Vertreter : **Müller, Hans-Jürgen, Dipl.-Ing.
Müller, Schupfner & Gauger Lucile-Grahn-Strasse 38
Postfach 80 13 69
D-8000 München 80 (DE)**

EP 0 013 287 B1

# 0 013 287

Einrichtung zur energiemäßigen Optimierung der Temperatur-Änderung in Gebäuden während deren Belegungspausen

Die Erfindung bezieht sich auf eine Einrichtung zum Optimieren des Energieverbrauchs in Gebäuden nach dem Obergriff des Anspruchs 1.

In Geschäftshäusern oder ähnlichen Gebäuden, deren Heiz-, Kühl- oder Klimaanlage große Energiemengen benötigt, besteht seit langem das Bestreben, die Energiezufuhr während der Belegungspausen, z. B. nachts und über die Wochenenden, zu drosseln, um damit die Wärmeverluste auf ein Minimum zu reduzieren und dadurch beträchtliche Energiemengen einsparen zu können. Dabei kann es sich sowohl um Energie für Heizzwecke als auch für Kühlanlagen handeln. Die nachfolgenden Ausührungen für Heizanlagen gelten daher sinngemäß auch für Kühlaggregate z. B. von Klimaanlagen.

Es sind Steuergeräte bekannt, welche die Raumtemperatur des Gebäudes z. B. in Abhängigkeit von der Außentemperatur während der Belegung des Gebäudes steuern und die einen Programmgeber enthalten, der zu vorwählbaren Zeiten die Raumtemperatur des Gebäudes bzw. einzelner Teile davon auf einen vorwählbaren Wert während der Belegungspausen des Gebäudes absenkt. Zur Sicherstellung der geforderten Raumtemperatur am Ende der Belegungspause muß die Umschaltung auch bei den selten vorhandenen tiefen Außentemperaturen noch mit genügender Zeitreserve erfolgen. Die Zeiteinstellung am Programmgeber wird daher zumeist so gewählt werden, daß die geforderte Raumtemperatur zu früh erreicht wird. Dies bedeutet einen Energieverlust.

Es sind auch bereits Geräte nach dem Gattungsbegriff der Erfindung bekannt (DE-A1-26 17 154), die ausgehend vom Ende der Belegungspause um einen bestimmten Betrag zeitlich vorverschoben mit einer Überprüfung beginnen, ob nach den momentan herrschenden thermischen Bedingungen die gewünschte Temperatur am Ende der Belegungspause erreichbar wäre und je nachdem die Energiezufuhr sofort oder erst zeitlich verzögert freigeben. Hierbei wird die zu erwartende Aufheizung durch eine elektrische Schaltung zeitlich gerafft simuliert und wird die sich aus der Zeit zwischen dem Prüfbeginn und dem Erreichen der Solltemperatur ergebende Zeitdifferenz zum Berechnen mittels des Rechners verwendet. Aber auch solche gewissermaßen statische Einrichtungen erlauben noch keine optimale Energieausnutzung und bedürfen einer der Anlage angepassten, empirisch ermittelten Einstellung über längere Zeit, die bei baulichen Veränderungen oder variablem Heizungsvorlauf nicht mehr optimal ist.

Däruber hinaus ist es bekannt (GB-A-1 193 711), bei Gebäude-Heizsystemen in Abhängigkeit von der gemessenen Außentemperatur ausgehend von einer bestimmten Nachttemperatur, den Aufheiz-Zeitpunkt so zu verändern, daß beim Beginn der Gebäudebelegung eine gewünschte Temperatur erreicht ist, indem der veränderliche Einschalt-Zeitpunkt des Heizsystems außer von der Außentemperatur und von weiteren Variablen, wie z. B. der tatsächlichen Temperatur eines Bezugsraumes, auch von Parametern, wie Kennwerten des Gebäudes, Kenndaten des Heizsystems, der Belegzeit des Gebäudes und dem eingestellten Temperatursollwert des Bezugsraumes, abhängig gemacht wird. Bestimmte Gebäudeparameter lassen sich hier aber nur durch eine Handeinstellung bzw. durch eine empirische Festlegung des Einschaltzeitpunktes fest vorgeben. Der Ausschaltzeitpunkt wird unveränderlich durch das Ende der Gebäudebelegung festgelegt.

Die begrenzte Voreinstellmöglichkeit von Steuerprogrammen des bekannten Systems wird gemäß der DE-A1-2 805 773 durch die Verwendung eines digitalen Speichers verbessert, der Informationen für längere Zeitintervalle speichern kann, wobei ein Rechner mit diesen Informationen und unter Berücksichtigung von bestimmten Faktoren, wie Innen- und Außentemperatur, thermische Gebäudeträgheit usw. den geeigneten Einschaltzeitpunkt ermittelt. Auch das mit diesem System ausgeübte Verfahren führt noch nicht zu einer optimalen Energieersparnis, da beispielsweise die Werte für die thermische Gebäudeträgheit nur empirisch vorgegeben werden können.

Ausgehend von den bekannten Einrichtungen zur energetisch optimierten Temperatursteuerung ist es die Aufgabe der vorliegenden Erfindung, diese Einrichtungen so zu verbessern, daß eine noch weitergehende energetische Optimierung auf einfache Weise erzielbar ist.

Die Erfindung ist im Anspruch 1 gekennzeichnet und in Unteransprüchen sind weitere Ausbildungen derselben beansprucht.

Die Erfindung löst die Aufgabe in einem Selbstlernprozeß ; dabei erfolgt die Schaltzeitpunktberechnung optimaler als bisher bekannt, da dynamischer auf viele sich ändernde Imponderabilien, z. B. bauliche Veränderungen, vollautomatisch Rücksicht genommen werden kann.

Nachfolgend wird ein Ausführungsbeispiel der Erfindung anhand zweier Figuren näher erläutert. Dabei zeigen

Figur 1   ein Temperatur-Zeit-Diagramm und

Figur 2   ein Blockschaltbild eines Optimierungsgerätes zum Steuern einer Heizanlage.

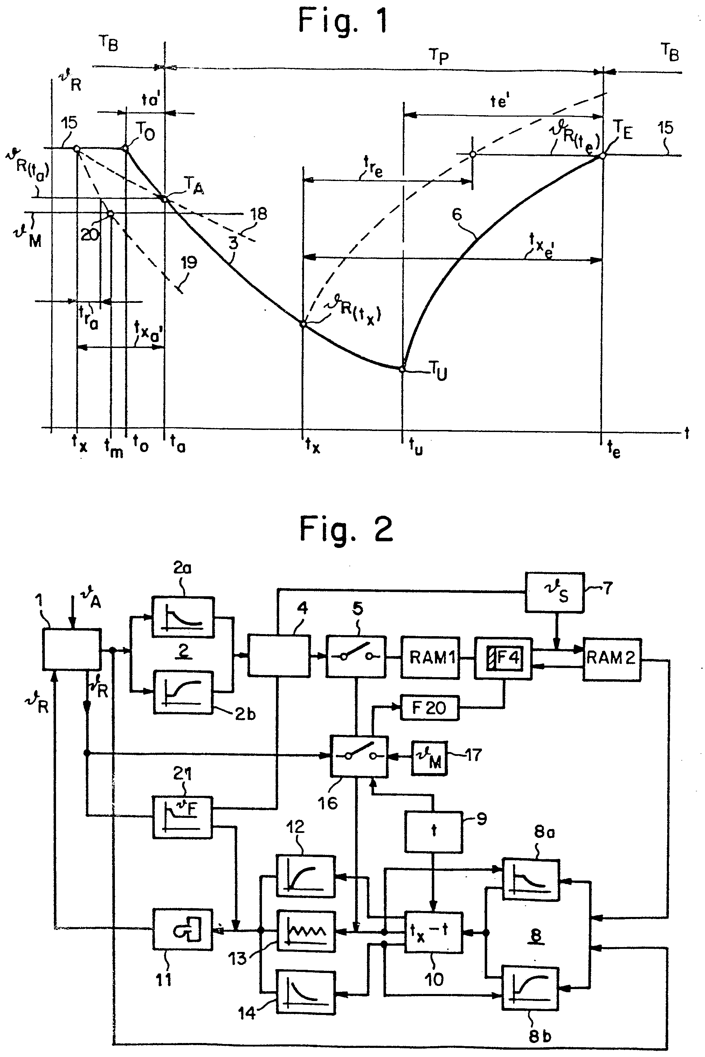

Die Einrichtung bildet als eine Art « Optimierungsgerät » ein Zusatzgerät zu einem die Raumtemperatur beispielsweise in Abhängigkeit von der Außentemperatur während einer Belegungszeit $T_B$ (Fig. 1) des Gebäudes steuernden nicht gezeigten Steuergerät. Die Einrichtung übernimmt die Steuerung der Gebäudetemperatur im wesentlichen während der Belegungspausen $T_p$ des Gebäudes und hat steuertechnisch gegenüber den Steuerbefehlen des nicht gezeigten Steuergerätes für die Belegungszeit $T_B$ den Vorrang. Zur Meßwerterfassung dient ein A/D-Converter 1, der im wesentlichen die Außentemperatur $\theta_A$ und die Raumtemperatur $\theta_R$ in entsprechende elektrische Signale umformt. Der im Anspruch 1

2

als « weiterer Rechner » bezeichnete Rechner 2 dient zur Umformung dieser Signale in « gebäudespezifische Parameter » (von Gebäude-einschließlich Anlageneigenschaften beeinflußte Parameter) und zwar sowohl für die Abkühl- als auch für die Aufheizfunktion, wobei die Parameter für jeden Zyklus neu bestimmt werden. Dabei dient ein Teil 2a des weiteren Rechners 2 zur Bestimmung « normierter Parameter » für den Ausgleichsvorgang zu Beginn der Belegungspause. Im beschriebenen Beispiel werden die Parameter ausgehend vom Beginn einer Abkühlkurve $3(\theta_R = f(t))$ an einem Punkt $T_0$ (Fig. 1) für drei Werte nach 60, 120 und 240 Minuten bestimmt und nach der Formel

$$Z_t = 1 - \frac{\theta_{R_{(t_x)}} - \theta_{A_{(t_0)}}}{\theta_{R_{(t_0)}} - \theta_{A_{(t_0)}}}$$

normiert. Darin bedeuten $\theta_{R_{(t_x)}}$ die Raumtemperatur zur momentanen Zeit $t_x$ und $\theta_{A_{(t_0)}}$ und $\theta_{R_{(t_0)}}$ die Aussen bzw. Raumtemperatur am Beginn der Abkühlkurve 3. Solchermassen ergeben sich Werte für $Z_{(t)}$ zwischen 0 und 1.

Wird der Abkühlvorgang vor Erreichen des letzten Parameters bei 240 Minuten abgebrochen, dann extrapoliert der Rechner 2a diesen Wert aus den vorangehenden Messwerten.

Ein Kontroller 4 dient zur Prüfung der Tauglichkeit der so ermittelten Parameter, wie weiter unten noch dargelegt wird. Er betätigt eine Freigabe-Einheit 5, die bei positivem Prüfergebnis die neu bestimmten Parameter einem ersten Speicher RAM1 zuführt.

Ein zweiter Teil 2b des Rechners 2 dient der Bestimmung von Parametern des Ausgleichsvorganges bei voller Energiezufuhr, im Beispiel beim Aufheizen. Es werden ca. 10 Werte

$$\Delta\theta_R = \theta_{R_{(t_x)}} - \theta_{R_{(t_u)}}$$

für die Zeiten 10 bis etwa 300 Minuten gebildet, sowie ein Wert

$$\Delta\theta = \theta_{R_{(t_u)}} - \theta_{A_{(t_u)}}$$

wobei dies die Differenz zwischen der Raumtemperatur und der Aussentemperatur zum Zeitpunkt $t_u$ bei Beginn der Wiederaufheizung ist. Ferner bestimmt der Rechner 2b als weiteren Parameter aus einer Aufheizkurve 6 eine durch das dynamische Verhalten der Gebäudewände bedingte Zeitkonstante

$$\alpha = -\frac{\sum_{t_x > t_u} \ln\left(1 - \frac{\Delta\theta_R - \Delta\theta_{R_N}}{\Delta\Delta\theta}\right)}{\sum_{t_x > t_u} (t_x - t_u)}$$

Darin bedeuten $\Delta\theta_R = \theta_{R_{(t_x)}} - \theta_{R_{(t_u)}}$. Zur Bestimmung von $\Delta\theta_R$ wird alle fünf Minuten die Raumtemperatur $\theta_{R_{(t_x)}}$ gemessen und obige differenz gebildet. Ferner bedeutet $\Delta\theta_{R_N}$ den aus einem weiter unten beschriebenen zweiten Speicher RAM2 entnommenen, auf den augenblichlichen Zeitwert $t_x$ interpolierten Wert, und $\Delta\Delta\theta$ die Differenz zwischen dem aus dem ebenfalls dem zweiten Speicher RAM2 entnommenen gefilterten Wert $\Delta\theta_N$ und dem zur Zeit $t_u$ bestehenden Unterschied zwischen der Raum- und Aussentemperatur. Das heisst :

$$\Delta\Delta\theta = \Delta\theta_N - \left(\theta_{R_{(t_u)}} - \theta_{A_{(t_u)}}\right).$$

Analog den drei Parametern des Abkühlvorganges werden die 12 Parameter für den Aufheizungsvorgang nach ihrer Tauglichkeit getestet und nach dem Beenden des Aufheizungsvorganges im ersten Speicher RAM1 gespeichert.

Ein Filter F4 ist zwischen dem ersten Speicher RAM1 und dem zweiten Speicher RAM2 angeordnet. Es dient als Korrchfurglied der Wertung der nach jeder Zustandsänderung bestimmten neuen, im ersten Speicher RAM1 gespeicherten Parameter $Z_t$, $\Delta\theta_R$, $\Delta\theta$, $\alpha$ mit den vom vorhergehenden Zyklus im zweiten Speicher RAM2 gespeicherten Werten

$$Z_{t_N}, \; \Delta\theta_{R_N}, \; \Delta\theta_N, \; \alpha_N.$$

Die Wertung erfolgt vorteilhaft nach der Beziehung Korrigierter Wert = 0,2 mal neuer Wert + 0,8 mal alter Wert mit der Einschränkung, dass beim Vorliegen einer grösseren Abweichung der korrigierte Wert vom alten Wert um Maximal $\pm 4\%$ abweichen darf.

Die wie beschrieben gefilterten neuen Parameter werden im zweiten Speicher RAM2 neu gespeichert und gleichzeitig die alten gelöscht.

Die Kennzeichnung der gefilterten Werte erfolgt nachfolgend durch einen Index N, also

$$Z_{t_N}, \; \Delta\theta_{R_N}, \; \Delta\theta_N \; \text{und} \; \alpha_N.$$

3

Die beschriebene Filterung bzw. Korrektur ergibt einen sich verändernden Bedingungen laufend anpassenden und nie endenden Lernprozess.

Zur Vorwahl der gewünschten Temperatur $\theta_S$ dient ein Sollwertgeber 7. Dieser beeinflusst direkt die Parameter im Zweiten Speicher RAM2, wirkt aber auch auf den Kontroller 4 in dem Sinne, dass bei einer Sollwertverstellung innerhalb eines Messzyklus die Parameter dieses Zyklus nicht ausgewertet werden.

Zum Vorausberechnen des Temperaturverlaufs einer nächsten Temperaturabsenkung gemäss der Abkühlkurve 3 bzw. einer Wiederaufheizung gemäss der Aufheizkurve 6 dient ein. Rechner 8 mit einem zugehörigen, von einem Programmgeber 9 beeinflussten Zeitglied 10. Dieser Rechner 8 berechnet periodisch unter Berücksichtigung der im zweiten Speicher RAM2 enthaltenen Parameter $Z_{t_N}$ bzw. $\Delta\theta_{R_N}$, $\Delta\theta_N$, $\alpha_N$ und der momentanen Aussen- und Raumtemperaturen $\theta_A$ bzw. $\theta_R$, ob bei einer zur momentanen Zeit $t_x$ erfolgenden Änderung des Energiezustandes einer Heizanlage 11, das heisst, ob durch eine Abschaltung oder durch deren volle Wiedereinschaltung, die zu vorgegebenen Zeiten $t_a$ bzw. $t_e$ geforderten Raumtemperaturen $\theta_{R_{(t_a)}}$ bzw. $\theta_{R_{(t_e)}}$ erreicht würden. Sobald dies der Fall ist, bewirkt der Rechner 8 je nach vorangehendem Zustand der Anlage, dass die Heizanlage 11 ausgeschaltet oder auf volle Leistung gebracht wird.

Der Rechner 8a dient der Vorausberechnung der Abkühlkurve 3 (Fig. 1) und der Rechner 8b dient der Vorausberechnung der Aufheizkurve 6.

Mit der Vorausberechnung der Abkühlkurve 3 beginnt der Rechner 8a unmittelbar nach dem Ende jeder Belegungspause $T_p$ und zwar nach der Beziehung

$$\theta_{R_{(t_a)}} = (1 - Z_{(t_x)_N}) \left(\theta_{R_{(t_x)}} - \theta_{A_{(t_x)}}\right) + \theta_{A_{(t_a)}}$$

Dabei bedeuten :

$Z_{(t_x)_N}$ die auf die Zeit $t_x$ interpoliert bzw. extrapolierten, aus dem zweiten Speicher RAM2 entnommenen gefilterten Parameter und $\theta_{R_{(t_x)}}$, $\theta_{A_{(t_x)}}$ die zur Zeit $t_x$ vom Converter 1 angegebenen Werte für die Raum- bzw. Aussentemperatur.

In gleicher Weise beginnt der Rechner 8b unmittelbar nach einer erfolgten Abschaltung der Heizanlage 11 zum Zeitpunkt $T_0$ die Vorausberechnung der Aufheizkurve 6 und zwar nach der Beziehung

$$\theta_{R_{(t_e)}} = \theta_{R_{(t_x)}} + \Delta\theta_{R_{N_{(t_e - t_x)}}} + \Delta\Delta\theta \cdot (1 - e^{-\alpha_N(t_e - t_x)})$$

Dabei bedeuten :

$\Delta\theta_{R_{N_{(t_e - t_x)}}}$ die auf die Zeit $t_x$ interpolierten bzw. extrapolierten, aus dem zweiten Speicher RAM2 entnommenen gefilterten zehn Parameter,

$\Delta\theta_N$, $\alpha_N$ je einen ebenfalls aus dem zweiten Speicher RAM2 entnommenen Parameter,

$\Delta\Delta\theta$ die Differenz zwischen dem Parameter $\Delta\theta_N$ und dem zur Zeit $t_x$ vorhandenen Unterschied der Raum- und Aussentemperatur $\theta_{R_{(t_x)}} - \theta_{A_{(t_x)}}$ und $t_e - t_x$ stellt den Zeitabschnitt dar, über den sich die Vorausberechnung erstreckt.

Der Programmgeber 9, der auch die reale Uhrzeit, vorteilhafterweise als Digitaluhr beinhaltet, veranlasst alle fünf Minuten eine Vorausberechnung der Abkühl- bzw. Aufheizkurven 3 bzw. 6. Dies kann auf zwei Arten erfolgen :

Entweder bestimmt der Rechner 8a bzw. 8b auf Grund der vorhandenen Zeitspannen $t_{x_a}{'}$ bzw. $t_{x_e}{'}$ zwischen der momentanen Uhrzeit und der programmierten Zeit des Anfanges $T_A$ bzw. des Endes $T_E$ der Belegungspause $T_p$ die zur Zeit $t_a$ bzw. $t_e$ sich ergebende Raumtemperatur $\theta_{R_{(t_a)}}$ bzw. $\theta_{R_{(t_e)}}$, wenn die Heizanlage 11 sofort aus- bzw. eingeschaltet wird. Eine Umschaltung der Heizanlage 11 würde dann erfolgen, wenn die errechnete Raumtemperatur $\theta_R$ ungefähr gleich der gewünschten Raumtemperatur $\theta_S$ wäre.

Die zweite Art der Berechnung entspricht der Darstellung in der Fig. 2. Der Rechner 8a bzw. 8b bestimmt laufend eine Zeitspanne $t_{r_a}$ bzw. $t_{r_e}$, die nötig ist, um ausgehend von der momentanen Zeit $t_x$ die gewünschte Raumtemperatur $\theta_{R_{(t_a)}}$ bzw. $\theta_{R_{(t_e)}}$ zu erreichen.

Das Zeitglied 10 bildet — ausgehend von der momentanen Uhrzeit — die Differenz zwischen der bis zum Anfang $T_A$ bzw. bis zum Ende $T_E$ der Belegungspause $T_p$ noch abzulaufenden Zeitspanne $t_{x_a}{'}$ bzw. $t_{x_e}{'}$ und der vom Rechner 8a bzw. 8b errechneten Zeitspanne $t_{r_a}$ bzw. $t_{r_e}$. Beim Verschwinden eines positiven Zeitdifferenzwertes $t_{x_a}{'} - t_{r_a}$ bzw. $t_{x_e}{'} - t_{r_e}$ wird zum Zeitpunkt $T_0$ die Heizanlage 11 abgeschaltet bzw. zum Zeitpunkt $T_U$ die Heizanlage voll eingeschaltet.

Das Zeitdifferenzglied 10 hat drei Ausgangszustände, die in der Fig. 2 mit drei Rechtecken 12, 13, 14 bezeichnet sind. Diese bedeuten sinnbildlich den Befehlsabgabezustand an die Energiequelle, im Beispiel an eine Heizanlage 11.

Im Zustand des Rechteckes 12 erfolgt die Aufheizung des Gebäudes mit meist voller Kesselleistung (Aufheizkurve 6 der Fig. 1). Allfällige Stellglieder sind voll offen und vorhandene Umwälzpumpen sind in Betrieb. Das die Gebäudetemperatur während dessen Belegung steuernde Steuergerät ist in dieser Zeit nicht wirksam.

Im Zustand des Rechteckes 13 ist die als Optimierungsgerät dienende Einrichtung inaktiv, das heisst, das Steuergerät übernimmt die Temperaturregelung, meist durch die Betätigung eines Stellgliedes

**0 013 287**

(Kurvenverlauf 14 der Fig. 1). Die Heizanlage 11 und die Umwälzpumpen sind in Betrieb.

Im Falle des dritten Rechteckes 14 wird keine Energie mehr zugeführt. Die Heizanlage 11 und die Umwälzpumpen sind abgestellt. Das Steuergerät ist wirkungslos (Abkühkurve 3 der Fig. 1). Dieser Zustand wird aus Gründen der Wirtschaftlichkeit bereits vor dem Ende der Belegungszeit eingeleitet. Während der Zeit $t_a'$, die vom Zeitpunkt $T_0$ bis zum Belegungspausen-Anfang $T_A$ bemessen ist, soll die Raumtemperatur $\theta_R$ nicht unter einen am Ende der Belegung des Gebäudes noch zulässigen Wert $\theta_M$ fallen. Es ist daher ein die Raumtemperatur $\theta_R$ erfassender, vom Programmgeber 9 überwachter Grenzthermostat 16 mit einem Sollwertgeber 17 vorhanden, der beim Unterschreiten einer einstellbaren Minimaltemperatur $\theta_M$ vor dem Ende der Belegungszeit $T_B$ ein weiteres Absinken der Raumtemperaur $\theta_R$ verhindert. Der Grenzthermostat 16 bewirkt bei seinem Ansprechen einerseits eine vorübergehende Umschaltung auf die Steuerung entsprechend dem Rechteck 13 der Fig. 2, das heisst, ein Umschalten auf das Heizprogramm während der Belegungszeit $T_B$ und andererseits stoppt er in der Freigabe-Einheit 4 die Erfassung der aktuellen Parameter $Z_t$ des angefangenen Abkühlzyklus.

Ein Korrekturfilter F20 bewirkt ausserdem, dass, im Falle des Ansprechens des Grenzthermostaten 16 über das Korrehtur filter F4 eine verstärkte Korrektur der im zweiten Speicher RAM2 enthaltenen Parameter $Z_t$ erfolgt, und zwar mit einer Wertung von etwa 20 %, das heisst an Stelle der vom Korrektur F4 auf 4 % beschrankten Korrektur der neuen Parameter-Werte gegenüber den alten Werten wird eine maximal mögliche Korrektur von 20 % zugelassen. Diese verstärkte Lernfähigkeit ist insbesondere am Anfang, kurz nach der Inbetriebnahme der Anlage oder nach einer Sollwertänderung, das heisst dann von Bedeutung, wenn die nötigen Parameter noch nicht bekannt sind und daher allenfalls die Minimal-Temperatur $\theta_M$ unterschritten wird. In der Fig. 1 ist eine nach falschen Parametern $Z_t$ errechnete Abkühlkurve 18 gestrichelt eingezeichnet, die vom Rechner 8a ein Abschalten der Heizanlage 11 zur Zeit $t_x$ veranlassen würde. Der tatsächliche Temperatur-Verlauf ergäbe sich aber nach einer der Abkühlkurve 3 parallelen ebenfalls gestrichelt dargestellten Kurve 19 die zur Zeit $t_m$ an einem Schnittpunkt 20 die Minimaltemperatur $\theta_M$ vor Ablauf der Uhrzeit $t_a$ unterschreitet. Dann würde der Grenzthermostat 16 ansprechen, wie dies eben beschrieben ist.

Ein direkt auf die Heizanlage 11 wirkender Minimalbegrenzer 21 dient als Frostschutzthermostat bzw. zur Verhinderung einer Kondensatbildung durch Begrenzung der Raumtemperatur-Absenkung im Gebäude während den Belegungspausen $T_p$ bei grossen Unterschieden zwischen der Raum- und der Aussentemperatur $\theta_R$ bzw. $\theta_A$. Sobald dessen Ansprechwert unterschritten wird, schaltet der Mini-malbegrenzer 21 die Heizanlage 11 allenfalls mit reduzierter Leistung wieder ein und sorgt für die Gewährleistung einer Minimaltemperatur. Der Rechner 8b bestimmt dann ausgehend von dieser Temperatur die Zeit $t_e'$ der Wiederaufheizung. Der Minimalbegrenzer 21 steht ferner mit dem dem weiteren Rechner 2 nachgeschalteten Kontroller 4 so in Wirkverbindung, dass beim Ansprechen des Minimalbegrenzers 21 die Auswertung weiterer Abkühl-Parameter $Z_t$ verhindert wird, andernfalls ergä-ben sich Falschwerte. Nötigenfalls extrapoliert der Rechner die Werte des bisherigen Kurvenverlaufes zur Bildung der Parameter $Z_t$.

Die den ganzen beschriebenen Vorgang steuernde und überwachende Einrichtung ist mit Vorteil ein Mikrocomputer und für den ersten Speicher RAM1 und den zweiten Speicher RAM2 dienen non volatile RAM-Festwertspeicher, das heisst solche, die bei einem Spannungsausfall ihre Speicherwerte nicht verlieren.

Besondere Beachtung erfordert die Tauglichkeitskontrolle des vom Mikrocomputer gesteuerten Kontrollers 4 und seiner Freigabe-Einheit 5. In dieser sollen alle, durch operative Fehler oder Eingriffe durch Verstellung von Menschenhand entstehende Zustände erkannt und die Errechnung neuer Parameter verhindert werden. Es sind dies beispielsweise :

Temperaturanstieg während der Abkühlzeit oder kein oder viel zu geringer Temperaturanstieg während der Aufheizzeit.

Da die beschriebene Einrichtung sofort, das heisst 5 Minuten nach dem Belegungsende die nötige Aufheiz-Zeitspanne $t_{r_e}$ zu berechnen beginnt, ist sichergestellt, dass auch eine bei extrem tiefen Aussentemperaturen mit Vollast arbeitende und daher keine Aufheizreserve aufweisende Heizanlage 11 die Einhaltung der geforderten Temperatur am Ende der Belegungspause $T_p$ gewährleistet. Die theoretische Aufheiz-Zeitspanne $t_{r_e}$ wird dann annähernd gleich gross wie die Belegungspause $T_p$ und die Heizanlage arbeitet während der Belegungspause mit Vollast weiter.

· Das beschriebene Optimierungsgerät macht die Bestimmung schwer erfassbarer gebäudespezifischer Einstellungen überflüssig. Das selbstlernende und selbstkorrigierende Ausmessen des jeweiligen Gebäudes garantiert eine problemlose Anwendung bei verschiedenartigsten gebäudedynamischen Verhalten sowie klimatischen Bedingungen. Die bisherigen Einstellschwierigkeiten mit nachträglichen Servicegängen für eine Nachkorrektur, beschränkte Anwendungsgrenzen, Ungenauigkeiten bei verschie-denen Witterungs- oder Raumzuständen werden vermieden.

Das die Raumtemperatur während der Belegungszeit beispielsweise witterungsabhängig steurnde Steuergerät ist weitgehend unabhängig vom beschriebenen Optimierungsgerät. Letzteres kann mit irgend einem, in einer Anlage allenfalls bereits bestehenden Steuergerät zusammen arbeiten. Eine gegenseitige Uebereinstimmung, die über die übliche Einstellmöglichkeit solcher Steuergeräte hinaus-geht, ist nicht nötig.

Die Selbstlernfähigkeit der als Optimierungsgerät dienenden Einrichtung erlaubt es erstmals, solche

5

Geräte auch für Gebäude zu verwenden, die an eine Fernheizung mit konstant-gleitender Vorlauftemperatur angeschlossen sind.

## Ansprüche

1. Einrichtung zum Optimieren des Energieverbrauches in Gebäuden anläßlich der Temperaturveränderung entsprechend einem vorgegebenen Programm für eine am Ende des Zeitraumes der Temperaturveränderung zu erreichende Temperatur, mit einem Steueraggregat, das einen Rechner (8), einen Programmgeber (9) und ein von diesem gesteuertes Zeitglied (10) aufweist und zum Steuern der Ein- bzw. Ausschaltzeitpunkte einer Heiz-, Kühl- oder Klimaanlage (11) dient, wobei der Rechner (8) in einem Zeitraum vor der jeweils gewünschten Temperaturveränderung unter Berücksichtigung durch die Gebäudeeingenschaften beeinflußter Parameter und der gemessenen augenblicklichen Werte für die Außen- und die Raumtemperatur mehrmals auf der Basis des rechnerisch zu erwartenden Temperatur-Zeit-Verhaltens den optimalen Zeitpunkt für die Ein- bzw. Ausschaltung der Heiz-, Kühl- oder Klimaanlage (11) bestimmt, um am Ende des Zeitraumes der Temperaturveränderung die gewünschte Raumtemperatur zu erreichen, dadurch gekennzeichnet, daß weiterer Rechner (2) während der Temperaturveränderungen aus den gemessenen Temperaturverläufen in vorgegebenen Zeitabständen die Gebäudeeingenschaften berücksichtigende Parameter bildet, daß die Parameter eines solchen Zyklus in einem ersten Speicher (RAM1) speicherbar sind und ein Korrekturglied (F4) mit vorgegebener Wertung die in einem zweiten Speicher (RAM2) vom vorhergehenden Zyklus gespeicherten alten Parameter aufgrund der neu bestimmten Parameter des ersten Speichers (RAM1) korrigiert, die alten Werte im zweiten Speicher (RAM2) durch die so gebildeten neuen Werte ersetzt und für die Berechnung des nächsten Zyklus speichert, daß der eine Rechner (8) die Vorausberechnung des zu erwartenden Temperatur-Zeitverhaltens und des daraus zu bestimmenden optimalen Schaltzeitpunktes aufgrund der im zweiten Speicher (RAM2) enthaltenen Parameter und der augenblicklichen Außen- und Raumtemperatur vornimmt.

2. Einrichtung nach Anspruch 1, dadurch gekennzeichnet, dass der weitere Rechner (2a) zur Bestimmung normierter Parameter $(Z_t)$ für den Ausgleichsvorgang zu Beginn der Belegungspause $(\theta_R = f(t))$ nach der Formel

$$Z_t = 1 - \frac{\theta_{R_{(t_x)}} - \theta_{A_{(t_0)}}}{\theta_{R_{(t_0)}} - \theta_{A_{(t_0)}}}$$

ausgerüstet ist, wobei $\theta_{R_{(t_x)}}$ die zur Zeit $t_x$ gemessene Raumtemperatur und $\theta_{A_{(t_0)}}$ und $\theta_{R_{(t_0)}}$ die Aussen- bzw. Raumtemperatur am Beginn des Ausgleichsvorganges (3) bedeuten.

3. Einrichtung nach Anspruch 1 oder 2, dadurch gekennzeichnet, dass dem weiteren Rechner (2b) für die Bestimmung von Parametern des Ausgleichsvorgangs bei voller Energiezufuhr die Beziehungen

$$\theta_R = f(t) ;$$

$$\Delta\theta = \theta_{R_{(t_u)}} - \theta_{A_{(t_u)}}$$

sowie für das Erfassen des dynamischen Verhaltens der Gebäudewände die Beziehung

$$\alpha = -\frac{\sum\limits_{t_x > t_u} \ln\left(1 - \frac{\Delta\theta_R - \Delta\theta_{R_N}}{\Delta\Delta\theta}\right)}{\sum\limits_{t_x > t_u} (t_x - t_u)}$$

zugrunde gelegt sind, wobei $\Delta\theta_R = \theta_{R_{(t_x)}} - \theta_{R_{(t_u)}}$ ist, $\Delta\theta_{RN}$ die gefilterten, aus dem zweiten Speicher (RAM2) entnommenen Werte bedeuten, $\Delta\Delta\theta = \Delta\theta_N - \Delta\theta$ ist und der Ausdruck $(t_x - t_u)$ den der Bestimmung der Parameter $\theta_R$ zugrunde gelegten Zeitwerten entspricht.

4. Einrichtung nach einem der vorhergehenden Ansprüche, dadurch gekennzeichnet, dass das Korrehfurglied (F4) nach Beendigung jedes Ausgleichsvorgangs (3 ; 6) die im zweiten Speicher (RAM2) enthaltenen Werte der Parameter $(Z_{t_N} ; \Delta\theta_{R_N}, \Delta\theta_N, \alpha_N)$ nach der Beziehung $(1 - q)$ mal neuer Wert $+ q$ mal alter Wert — mit $0 < q < 1$ — neu bildet, und im zweiten Speicher (RAM2) als gefilterte Werte neu speichert.

5. Einrichtung nach einem der vorhergehenden Ansprüche, dadurch gekennzeichnet, dass ein die Raumtemperatur $(\theta_R)$ erfassender, vom Programmgeber (9) überwachter Grenzthermostat (16) mit einem Sollwertgeber (17) vorhanden ist, der beim Ueberschreiten einer einstellbaren Grenze $(\theta_M)$ vor dem Ende der Belegungszeit $(T_B)$ eine weitere Aenderung der Raumtemperatur $(\theta_R)$ verhindert, und dass ein Korrekturfilter (F20) im Falle des Ansprechens des Grenzthermostaten (16) über das Korrehturglied (F4) eine verstärkte Korrektur der im zweiten Speicher (RAM2) enthaltenen Parameter $(Z_{t_N})$ der Zustandsänderung (3) während der Energiesperrung bewirkt.

6

6. Einrichtung nach einem der vorhergehenden Ansprüche, dadurch gekennzeichnet, dass ein direkt auf eine Heizanlage (11) einwirkender Minimalbegrenzer (21) zur Begrenzung der Raumtemperatur-Absenkung (3) während den Belegungspausen ($T_p$) insbesondere zum Frotschutz mit einem dem weiteren Rechner (2a) nachgeschalteten Kontroller (4) zum Verhindern einer Auswertung weiterer Abkühl-Parameter ($Z_t$) nach dem Ansprechen des Minimalbegrenzers (21) in Wirkverbindung steht.

7. Einrichtung nach einem der vorhergehenden Ansprüche, dadurch gekennzeichnet, dass der Rechner (8a) die Vorausberechnung während der Belegungszeit ($T_B$) nach der Beziehung

$$\theta_{R_{(t_a)}} = (1 - Z_{(t_x)_N}) \left(\theta_{R_{(t_x)}} - \theta_{A_{(t_x)}}\right) + \theta_{A_{(t_x)}} \, .$$

durchführt, wobei $Z_{(t_x)N}$ die auf die Zeit $t_x$ interpolierten, aus dem zweiten Speicher (RAM2) entnommenen gefilterten Parameter und $\theta_{R_{(t_x)}}$, $\theta_{A_{(t_x)}}$ die zur Zeit $t_x$ gemessenen Werte der Raumtemperatur bzw. der Aussentemperatur bedeuten.

8. Einrichtung nach einem der vorheigehenden Ansprüche, dadurch gekennzeichnet, dass zur Vorausberechnung der zur Zeit ($t_e$) am Ende der Belegungspause ($T_p$) geforderten Raumtemperatur ($\theta_{R_{(t_e)}}$) dem Rechner (8b) die Beziehung

$$\theta_{R_{(t_e)}} = \theta_{R_{(t_x)}} + \Delta\theta_{R_{N_{(t_e - t_x)}}} + \Delta\Delta\theta \cdot (1 - e^{-\alpha_N(t_e - t_x)}) \, .$$

dient, wobei $\theta_{R_{(t_x)}}$ die zur Zeit $t_x$ gemessene Raumtemperatur ist, $\Delta\theta_{R_{N_{(t_e - t_x)}}}$ und $\alpha_N$ die gefilterten, aus dem zweiten Speicher (RAM2) entnommenen Parameter bedeuten, $\Delta\Delta\theta$ der Differenz des ebenfalls aus dem zweiten Speicher (RAM2) entnommenen Parameters $\Delta\theta_N$ und des zur Zeit $t_x$ vorhandenen Unterschiedes der Raum- und Aussentemperatur ($\theta_{R_{(t_x)}} - \theta_{A_{(t_x)}}$) entspricht und der Ausdruck ($t_e - t_x$) den Zeitabschnitt darstellt, über den sich die Vorausberechnung erstreckt.

9. Einrichtung nach einem der vorhergehenden Ansprüche, dadurch gekennzeichnet, dass die den ganzen Ablauf steuernde und überwachende Einrichtung als Mikrocomputer angebildet ist.

10. Einrichtung nach einem der vorhergehenden Ansprüche, dadurch gekennzeichnet, dab der Rechner (8) die Vorausberechnung der optimalen Schaltzeitpunkte ($T_o$, $T_u$) periodisch sowohl während des Zeitraumes im wesentlichen konstanter Raumtemperatur (Belegzeiten) als auch während der Zeitraumes sich ändernder Raumtemperatur (Belegpausen) vornimmt.

### Claims

1. An arrangement for optimising the energy consumption in buildings upon the change in temperature in accordance with a predetermined program for a temperature to be attained at the end of the period of the change in temperature, comprising a control assembly which has a computer (8), a programmer (9) and a timer (10) controlled by the programmer, and serves for controlling the times of switching on and switching off a heating, cooling or air conditioning installation (11), wherein the computer (8), in a period before the respectively desired change in temperature, taking account of parameters which are affected by the characteristics of the building, and the measured instantaneous values in respect of outside and room temperatures, repeatedly determines the optimum time for switching on or switching off the heating, cooling or air conditioning installation (11), on the basis of the temperature-time relationship to be expected by computation, in order to attain the desired room temperature at the end of the period of the change in temperature, characterised in that a further computer (2) forms the parameters which take account of the characteristics of the building, during the changes in temperature, from the measured temperature patterns at predetermined time intervals, that the parameters of such a cycle can be stored in a first memory (RAM1) and a correction member (F4) corrects, with a predetermined valuation, the old parameters stored in a second memory (RAM2) from the preceding cycle, on the basis of the freshly defined parameters of the first memory (RAM1), replaces the old values in the second memory (RAM2) by the new values formed in that way, and stores same for computation of the next cycle, and that the one computer (8) performs the pre-computation of the temperature-time pattern to be expected, and the optimum switching time to be determined therefrom, on the basis of the parameters contained in the second memory (RAM2) and the instantaneous outside and room temperatures.

2. An arrangement according to claim 1 characterised in that the further computer (2a) is designed for determining standardised parameters ($Z_t$) for the compensation operation at the beginning of the break in occupation ($\theta_R = f\,(t)$), in accordance with the formula :

$$Z_t = 1 - \frac{\theta_{R_{(t_x)}} - \theta_{A_{(t_x)}}}{\theta_{R_{(t_0)}} - \theta_{A_{(t_0)}}}$$

wherein $\theta_{R_{(t_x)}}$ denotes the room temperature measured at time $t_x$, and $\theta_{A_{(t_0)}}$ and $\theta_{R_{(t_0)}}$ denote the

outside temperature and the room temperature respectively at the beginning of the compensation operation (3).

3. An arrangement according to claim 1 or claim 2 characterised in that, for determining parameters of the compensation operation, at full power supply, the further computer (2b) is based on the following relationships :

$$\theta_R = f(t) \, ;$$
$$\Delta\theta = \theta_{R_{(t_u)}} - \theta_{A_{(t_u)}}$$

while for determining the dynamic behaviour of the walls of the building, it is based on the following relationship :

$$\alpha = -\frac{\sum\limits_{t_x > t_u} \ln\left(1 - \frac{\Delta\theta_R - \Delta\theta_{R_N}}{\Delta\Delta\theta}\right)}{\sum\limits_{t_x > t_u}(t_x - t_u)}$$

wherein $\Delta\theta_R = \theta_{R_{(t_x)}} - \theta_{R_{(t_u)}}$, $\Delta\theta_{R_N}$ is the filtered values taken from the second memory (RAM2), $\Delta\Delta\theta = \Delta\theta_N - \Delta\theta$, and the expression $(t_x - t_u)$ corresponds to the time values forming the basis for determining the parameters $\theta_R$.

4. An arrangement according to one of the preceding claims characterised in that, after termination of each compensation operation (3 ; 6), the correction member (F4) re-forms the values contained in the second memory (RAM2), of the parameters ($Z_{t_N}$ ; $\Delta\theta_{R_N}$, $\Delta\theta_N$, $\alpha_N$) in accordance with the relationship (1 − q) times fresh value + q times old values — with $0 < q < 1$ —, and freshly stores same in the second memory (RAM2) as filtered values.

5. An arrangement according to one of the preceding claims characterised in that there is a limit thermostat (16) with reference value generator (17), which detects the room temperature ($\theta_R$) and which is monitored by the programmer (9) and which, when an adjustable limit ($\theta_M$) is exceeded, before the end of the occupancy period ($T_B$), prevents a further change in the room temperature ($\theta_R$), and that a correction filter (F20), in the event of the limit thermostat (16) responding, causes, by way of the correction member (F4), increased correction of the parameters ($Z_{t_N}$) contained in the second memory (RAM2), in respect of the change in state (3), during the energy stoppage.

6. An arrangement according to one of the preceding claims characterised in that a minimum limiting means (21) which acts directly on a heating installation (11), for limiting the drop (3) in room temperature during the breaks in occupation ($T_p$), in particular for protection from frost, is operatively connected to a controller (4) connected to the output of the further computer (2a), for preventing evaluation of further cooling parameters ($Z_t$) after the minimum limiting means (21) has responded.

7. An arrangement according to one of the preceding claims characterised in that the computer (8a) performs the pre-computation operation during the occupancy period ($T_B$) in accordance with the equation :

$$\theta_{R_{(t_u)}} = (1 - Z_{(t_x)_N})(\theta_{R_{(t_x)}} - \theta_{A_{(t_x)}}) + \theta_{A_{(t_x)}}$$

wherein $Z_{(t_x)_N}$ denotes the filtered parameters which are interpolated to time $t_x$ and which are taken from the second memory (RAM2), and $\theta_{R_{(t_x)}}$, $\theta_{A_{(t_x)}}$ denote the values, measured at time $t_x$, of room temperature and outside temperature respectively.

8. An arrangement according to one of the preceding claims characterised in that the equation

$$\theta_{R_{(t_e)}} = \theta_{R_{(t_x)}} + \Delta\theta_{R_{N_{(t_e - t_x)}}} + \Delta\Delta\theta.(1 - e^{-\alpha_N(t_e - t_x)})$$

serves the computer (8b) for pre-computation of the room temperature ($\theta_{R_{(t_e)}}$) which is required at the time ($t_e$) at the end of the break in occupation ($T_p$), wherein $\theta_{R_{(t_x)}}$ denotes the room temperature as measured at time $t_x$, $\Delta\theta_{R_{N_{(t_e - t_x)}}}$ and $\alpha_N$ denote the filtered parameters taken from the second memory (RAM2), $\Delta\Delta\theta$ denotes the difference of the parameter $\Delta\theta_N$ which is also taken from the second memory (RAM2) and the difference, at time $t_x$, between the room and outside temperatures ($\theta_{R_{(t_x)}} - \theta_{A_{(t_x)}}$), and the expression ($t_e - t_x$) represents the period of time over which the precomputation operation extends.

9. An arrangement according to one of the preceding claims characterised in that the means for monitoring and controlling the entire procedure is in the form of a microcomputer.

10. An arrangement according to one of the preceding claims characterised in that the computer (8) effects pre-computation of the optimum switching times, ($T_o$, $T_u$) periodically both during the period of substantially constant room temperature (periods of occupation) and also during the period of varying room temperature (breaks in occupation).

**Revendications**

1. Dispositif pour optimiser la consommation d'énergie dans des bâtiments en rapport avec la variation de température conformément à un programme prédéterminé pour une température devant être obtenue à la fin de l'intervalle de temps de la variation de température, au moyen d'une unité de commande qui comporte un calculateur (8), un générateur de programmes (9) et un organe de commande temporelle (10) commandé par ce dernier, et sert à la commande des instants de branchement et de débranchement d'une installation de chauffage, de refroidissement ou de climatisation (11), le calculateur (8) déterminant plusieurs fois sur la base du comportement température-temps auquel on peut s'attendre sur la base de calculs, et dans un intervalle de temps situé avant la variation respectivement désirée de la température en tenant compte de paramètres influencés par des caractéristiques du bâtiment et des valeurs instantanées mesurées de la température extérieure et de la température ambiante, l'instant optimal du branchement ou du débranchement de l'installation de chauffage, de refroidissement ou de climatisation (11) afin d'obtenir la température ambiante désirée à la fin de l'intervalle de temps de la variation de température, caractérisé en ce que pendant les variations de température, un calculateur supplémentaire (2) forme à partir des variations mesurées de la température dans des intervalles de temps prédéterminés, des paramètres tenant compte des caractéristiques du bâtiment, que les paramètres d'un tel cycle peuvent être mémorisés dans une première mémoire (RAM1) et qu'un organe de correction (F4) corrige, avec une évaluation prédéterminée, les anciens paramètres mémorisés dans une seconde mémoire (RAM2) pour le cycle précédent, sur la base des paramètres nouvellement déterminés de la première mémoire (RAM1), remplace les anciennes valeurs dans la seconde mémoire (RAM2) par les valeurs nouvelles ainsi formées et les mémoires pour le calcul du cycle suivant, et qu'un calculateur (8) réalise le calcul anticipé du comportement température-temps, auquel on peut s'attendre, et de l'instant optimal de commutation devant être déterminé, à partir de là, sur la base des paramètres contenus dans la seconde mémoire (RAM2) et de la température extérieure et de la température ambiante instantanées.

2. Dispositif selon la revendication 1, caractérisé en ce que ce calculateur supplémentaire (2a) est monté pour la détermination de paramètres normalisés ($Z_t$) pour le processus de compensation du début de la pause entre occupations ($\theta_R = f(t)$) selon la formule

$$Z_t = 1 - \frac{\theta_{R_{(t_x)}} - \theta_{A_{(t_0)}}}{\theta_{R_{(t_0)}} - \theta_{A_{(t_0)}}}$$

$\theta_{R_{(t_x)}}$ représentant la température ambiante mesurée à l'instant $t_x$ et $\theta_{A_{(t_0)}}$ et $\theta_{R_{(t_0)}}$ représentant la température extérieure et la température ambiante au début du processus de compensation (3).

3. Dispositif selon la revendication 1 ou 2, caractérisé en ce que le calculateur supplémentaire (2b) prend pour bases, pour la détermination de paramètres du processus de compensation pour un apport total d'énergie, les relations

$$\theta_R = f(t) \; ;$$
$$\Delta\theta = \theta_{R_{(t_u)}} - \theta_{A_{(t_u)}}$$

ainsi que, pour la détermination du comportement dynamique des murs du bâtiment, la relation

$$\alpha = - \frac{\sum_{t_x > t_u} \ln \left(1 - \frac{\Delta\theta_R - \Delta\theta_{R_N}}{\Delta\Delta\theta}\right)}{\sum_{t_x > t_u} (t_x - t_u)}$$

avec $\Delta\theta_R = \theta_{R_{(t_x)}} - \theta_{R_{(t_u)}}$, et $\Delta\theta_{RN}$ représentant les valeurs filtrées prélevées de la seconde mémoire (RAM2), et avec $\Delta\Delta\theta = \Delta\theta_N - \Delta\theta$, tandis que l'expression $(t_x - t_u)$ représente les valeurs prises pour base de la détermination des paramètres $\theta_R$.

4. Dispositif selon l'une des revendications précédentes, caractérisé en ce que l'organe de correction (F4) forme à nouveau, à la fin de chaque processus de compensation (3, 6) les valeurs, contenues dans la seconde mémoire (RAM2), des paramètres ($Z_{t_N}$ ; $\Delta\theta_{R_N}$, $\Delta\theta_N$, $\alpha_N$) conformément à la relation $(1 - q)$ x nouvelle valeur + q x ancienne valeur, avec $0 < q < 1$, lesdites valeurs étant à nouveau mémorisées dans la seconde mémoire (RAM2) en tant que valeurs filtrées.

5. Dispositif selon l'une des revendications précédentes, caractérisé en ce qu'il est prévu un thermostat de limitation (16), détectant la température ambiante ($\theta_R$) et contrôlé par le générateur de programmes (9) et comportant un générateur de valeur de consigne (17), et qui empêche une modification supplémentaire de la température ambiante ($\theta_R$) lorsque la température passe au-delà d'une limite réglable ($\theta_M$) avant la fin de la durée d'occupation ($T_B$), et qu'un filtre de correction (F20) provoque dans le cas de la réponse du thermostat de limitation (16), par l'intermédiaire de l'organe de correction (F4), une correction amplifiée des paramètres ($Z_{t_N}$), contenue dans la seconde mémoire (RAM2), de la modification d'état (3) pendant l'arrêt de l'énergie.

6. Dispositif suivant l'une des revendications précédentes, caractérisé en ce qu'un limiteur de minimum (21), agissant directement sur une installation de chauffage (11) et servant à limiter la diminution (3) de la température ambiante pendant les pauses entre occupations ($T_p$), notamment pour réaliser la protection contre le gel, est en liaison active avec un contrôleur (4) branché en aval du calculateur supplémentaire (2a) et servant à empêcher une évaluation d'autres paramètres de refroidissement ($Z_t$) après la réponse du limitateur de minimum (21).

7. Dispositif selon l'une des revendications précédentes, caractérisé en ce que le calculateur (8a) effectue le calcul anticipé pendant la durée d'occupation ($T_B$) selon la relation

$$\theta_{R_{(t_c)}} = \left(1 - Z_{(t_x)N}\right)\left(\theta_{R_{(t_x)}} - \theta_{A_{(t_x)}}\right) + \theta_{A_{(t_x)}}$$

$Z_{(t_x)N}$ représentant les paramètres filtrés interpolés à l'instant $t_x$ et prélevés de la seconde mémoire (RAM2), et $\theta_{R_{(t_x)}}$, $\theta_{A_{(t_x)}}$ représentant les valeurs, mesurées à l'instant $t_x$ de la température ambiante et de la température extérieure.

8. Dispositif selon l'une des revendications précédentes, caractérisé en ce que pour réaliser le calcul anticipé de la température ambiante ($\theta_{R_{(t_e)}}$), requise à l'instant ($t_e$) à la fin de la pause entre occupations ($T_p$), le calculateur (8b) utilise la relation

$$\theta_{R_{(t_e)}} = \theta_{R_{(t_x)}} + \Delta\theta_{R_{N_{(t_e-t_x)}}} + \Delta\Delta\theta.\left(1 - e^{-\alpha_N(t_e - t_x)}\right)$$

$\theta_{R_{(t_x)}}$ représentant la température ambiante, mesurée à l'instant $t_x$, $\Delta\theta_{R_{N_{(t_e-t_x)}}}$ et $\alpha_N$ représentant les paramètres filtrés tirés de la seconde mémoire (RAM2), $\Delta\Delta\theta$ représentant la différence du paramètre $\Delta\theta_N$, tiré également de la seconde mémoire (RAM2), et de la différence, existant à l'instant $t_x$ entre la température ambiante et la température extérieure ($\theta_{R_{(t_x)}} - \theta_{A_{(t_x)}}$), et l'expression ($t_e - t_x$) représentant l'intervalle de temps pendant lequel s'effectue le calcul anticipé.

9. Dispositif selon l'une des revendications précédentes, caractérisé en ce que le dispositif commandant et contrôlant l'ensemble du déroulement est réalisé sous la forme d'un micro-ordinateur.

10. Dispositif selon l'une des revendications précédentes, caractérisé en ce que le calculateur (8) effectue périodiquement le calcul anticipé des instants optimum de branchement ($T_o$, $T_u$) aussi bien pendant l'intervalle de temps d'existence d'une température ambiante essentiellement constante (durée d'occupation) que pendant l'intervalle de temps d'existence d'une température ambiante variable (pause entre occupations).

0 013 287

Fig. 1

Fig. 2